# EUROPEAN PATENT APPLICATION

(11) **EP 1 894 666 A2**
(43) Date of publication of application: **05.03.2008**
(21) Application number: 07405227.5
(22) Date of filing: 02.08.2007
(51) Int. Cl.: B23K 26/42, C21D 1/09

(54) **Laser hardening device**

(30) Priority: 29.08.2006 JP 2006232342
(71) Applicant: YAMAZAKI MAZAK CORPORATION, Niwa-gun, Aichi (JP)
(72) Inventor: Yamazaki, Tsunehiko, c/o Yamazaki Mazak Corp., Niwa gun, Aichi pref. (JP); Miyakawa, Naoomi, c/o Yamazaki Mazak Corp., Niwa gun, Aichi pref. (JP)
(74) Representative: Moinas, Michel

(57) **Abstract**

The invention provides a hardening device with a semiconductor laser oscillator. The laser hardening device 1 has a table 20 rotating around axis C on a bed 10. A hardening head 40 that moves along axis Z is attached to a column 30 moving along axis Y orthogonal to axis C. The hardening head 40 has a semiconductor laser oscillator. A main spindle 50 of the hardening head rotates around axis B, and a laser beam is irradiated from a torch T to subject the surface of a work gripped via a chuck 22 on the table 20 to hardening. A torch automatic changer 100 has a plurality of torches T stored to the outer circumference portion of a rotating magazine, and automatically changes torches on the main spindle 50.

## Description

### BACKGROUND OF THE INVENTION

### Field of the invention

The present invention relates to a laser hardening device having a laser torch changer.

### Description of the related art

Japanese Patent Application Laid-Open Publication No. 2005-334951 (patent document 1) filed by the present applicant discloses an art of attaching a laser hardening tool to a main spindle of a machine tool so as to perform hardening within the machine tool.

Japanese Patent Application Laid-Open Publication No. 2004-130335 (patent document 2) discloses a semiconductor laser device.

Semiconductor laser is capable of irradiating a beam with an extremely small spot. When such beam is irradiated on a surface of ametal component, the irradiated portion is heated to hardening temperature, but the temperature of the whole component is not raised, so a hardening layer is formed to the irradiated portion via a self-cooling effect.

### SUMMARY OF THE INVENTION

The object of the present invention is to focus on such semiconductor laser, and to provide a laser hardening device with an automatic changer for changing laser torches to correspond to the shapes of works.

In order to achieve this object, the laser hardening device of the present invention comprises a bed; a table disposed on a bed and rotating around axis C; a column disposed on the bed and moving along axis Y orthogonal to axis C; a head having a semiconductor laser oscillator supported by the column and moving along axis Z orthogonal to axis Y; a main spindle supported by the head and rotating around axis B; a hardening torch attached removably to the main spindle; and a torch automatic changer disposed on the bed.

Further, the torch automatic changer comprises a rotating magazine, a torch holder disposed on an outer circumference of the magazine, and a mechanism for moving the torch holder allocated to a torch changing position up and down toward the main spindle of the head.

The laser hardening device according to the present invention irradiates the laser beam output from the semiconductor laser oscillator on the surface of a work to realize hardening via the self-cooling effect of the work. Since the present device includes within the device a torch automatic changer for attaching torches to a main spindle of the hardening head, it becomes possible to select a suitable torch for hardening and to automate the hardening process.

### BRIEF DESCRIPTION OF THE DRAWINGS

FIG. 1 is a perspective view showing the outline of the laser hardening device according to the present invention;
FIG. 2 is an explanatory view showing the outline of the main spindle;
FIG. 3 is an explanatory view showing the structure of the torch automatic changer;
FIG. 4 is an explanatory view showing the structure of the torch automatic changer;
FIG. 5 is an explanatory view showing the automatic changing operation of torches;
FIG. 6 is an explanatory view showing the automatic changing operation of torches;
FIG. 7 is an explanatory view showing the automatic changing operation of torches;
FIG. 8 is an explanatory view showing the automatic changing operation of torches; and
FIG. 9 is a flowchart showing the automatic torch changing process.

### DETAILED DESCRIPTION OF THE PREFERRED EMBODIMENTS

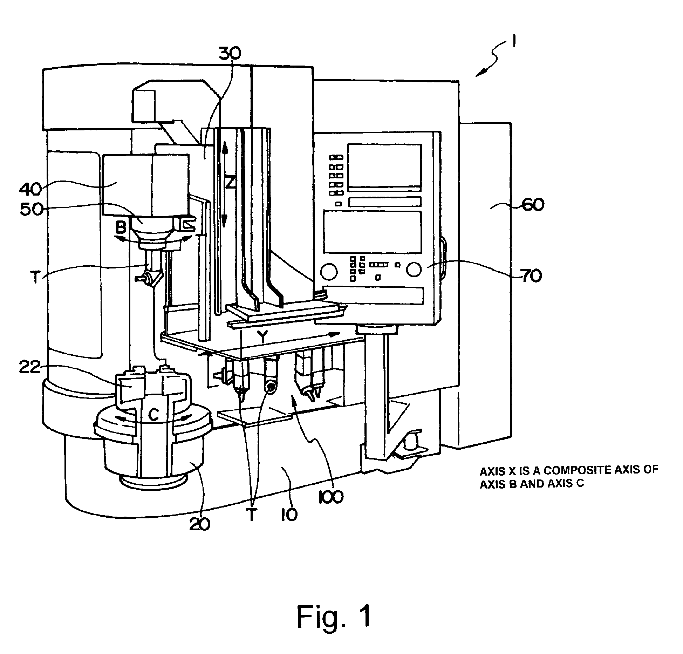

FIG. 1 is a perspective view showing the outline of a laser hardening device according to the present invention.

The laser hardening device denoted as a whole by reference number 1 has a table 20 disposed on a bed 10, and a chuck 22 disposed on the table 20. The table 20 is rotated around axis C. A column 30 driven in the direction of axis Y is disposed on the bed 10, and on the front side of the column 30 is disposed a hardening head 40 capable of being moved in sliding motion in the direction of axis Z.

The hardening head 40 has a main spindle 50, and on the main spindle 50 is attached a hardening torch T in a changeable manner. The main spindle 50 is rotated around axis B. The laser hardening device 1 does not have a sliding axis in the direction of axis X that is orthogonal to axis Y within the horizontal plane. Axis X is composed of a composite axis of axis B of the main spindle 50 and the table 20. The laser hardening device 1 is equipped with an electric panel 60 and an NC device 70.

The hardening head 40 stores a semiconductor laser unit, and the laser beam irradiated from the semiconductor laser unit is conducted via the torch T, converged via an optical system including a lens, and forms a spot on the surface of a work gripped by a chuck 22 to thereby perform hardening.

A torch automatic changer 100 is disposed adjacent to the table 20 on the bed 10. The torch automatic changer 100 has a rotating magazine, and a plurality of torches T to be changed are stored at the outer circumference portion of the magazine.

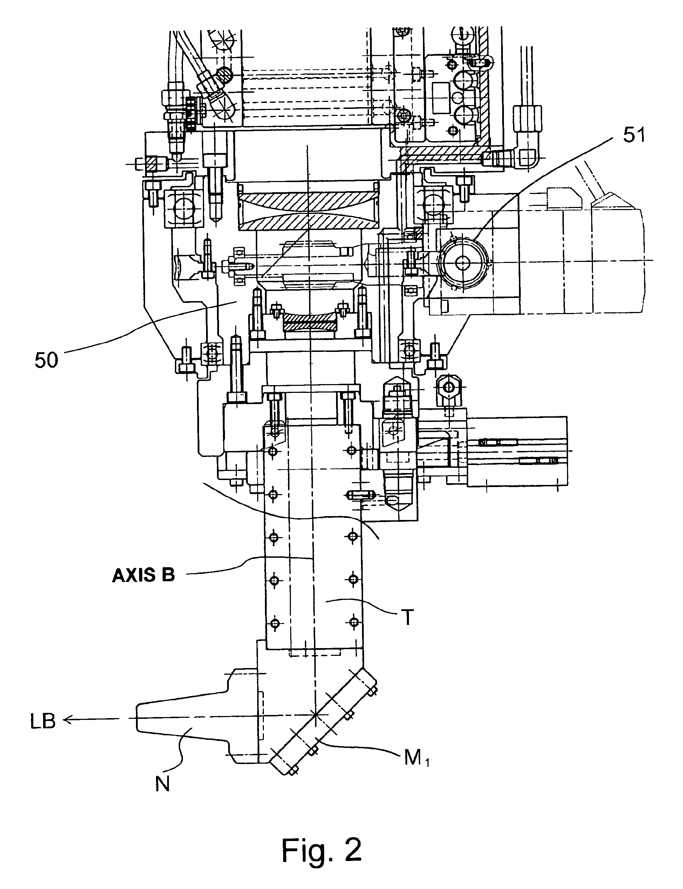

FIG. 2 shows the outline of the main spindle 50. The main spindle 50 is driven to rotate around axis B via a worm mechanism 51. A hardening torch T is attached in a replaceable manner to the main spindle 50. The hardening torch T has a reflecting mirror M₁ for irradiating a laser beamLB through a nozzle N to the direction orthogonal to axis B. Various types of hardening torch structures are prepared to correspond to the various shapes of works, such as for irradiating the laser beam LB to the direction of axis B or for irradiating the laser beam LB at an angle of 45 degrees with respect to axis B.

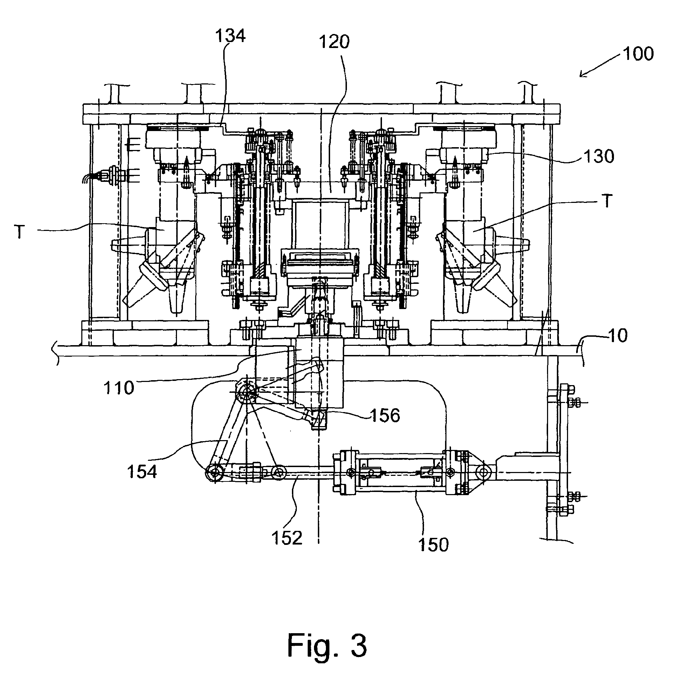

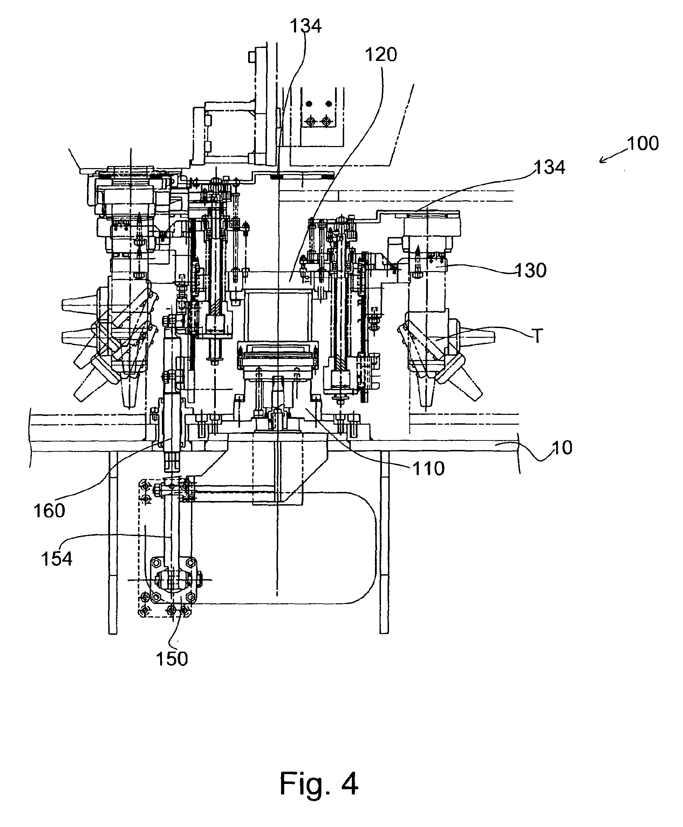

FIGS. 3 and 4 are explanatory views showing the structure of the torch automatic changer 100.

A base 110 is fixed to the side toward the bed 10, and on the base 110 is disposed a magazine 120 in a rotatable manner.

A plurality of torch holders 130 are disposed on the outer circumference portion of the magazine 120 for storing torches T. A rotating cover 134 is disposed on an upper portion of the torch holder 130 for protecting the opening at the upper portion of the stored torch T.

A rear end portion of a cylinder 150 is supported on the side of the bed 10, and the leading end of a rod 152 is connected to a link arm 154. A joint portion 156 at the leading end of the link arm 154 moves the rod 160 up and down. The rod 160 moves the torch holder 130 allocated to the torch changing position up and down. The torch holder 130 has a mechanism for rotating and opening the cover 134 against a spring force in synchronism with the elevating movement.

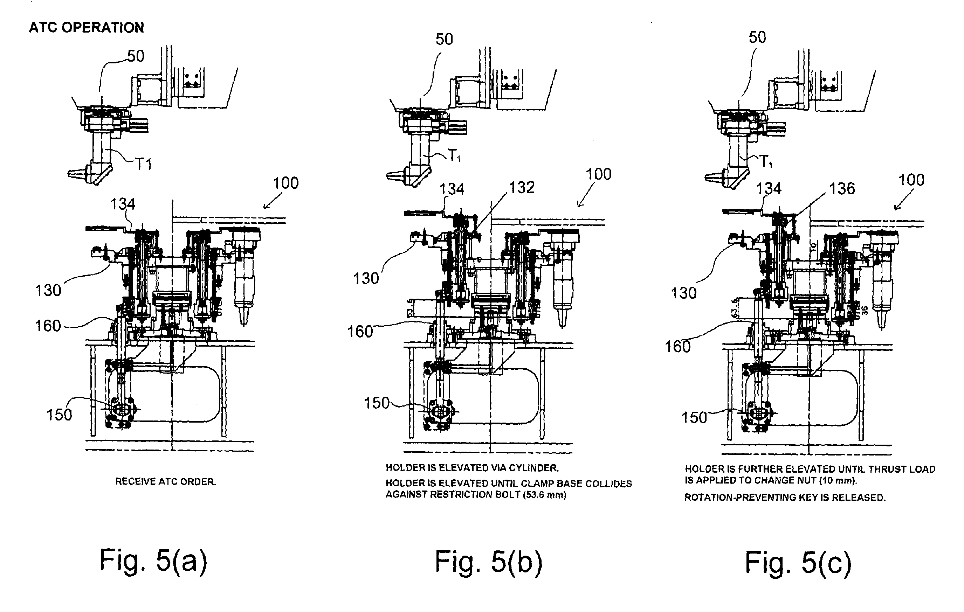

FIGS. 5 through 8 illustrate the automatic changing operation of torches.

When an order to change torches is received, as shown in FIG. 5(a), the main spindle 50 of a processing head to which the used torch T₁ is attached moves to an ATC position above a torch automatic changer 100. In FIG. 5(b), the cylinder 150 is operated to elevate the rod 160, and a vacant torch holder 130 for receiving the used torch T₁ allocated in advance to the ATC position is elevated. By this elevating movement, a clamp base collides against a restriction bolt 132.

When the torch holder 130 is elevated further, a rotation-preventing key 136 is released, as shown in FIG. 5(c).

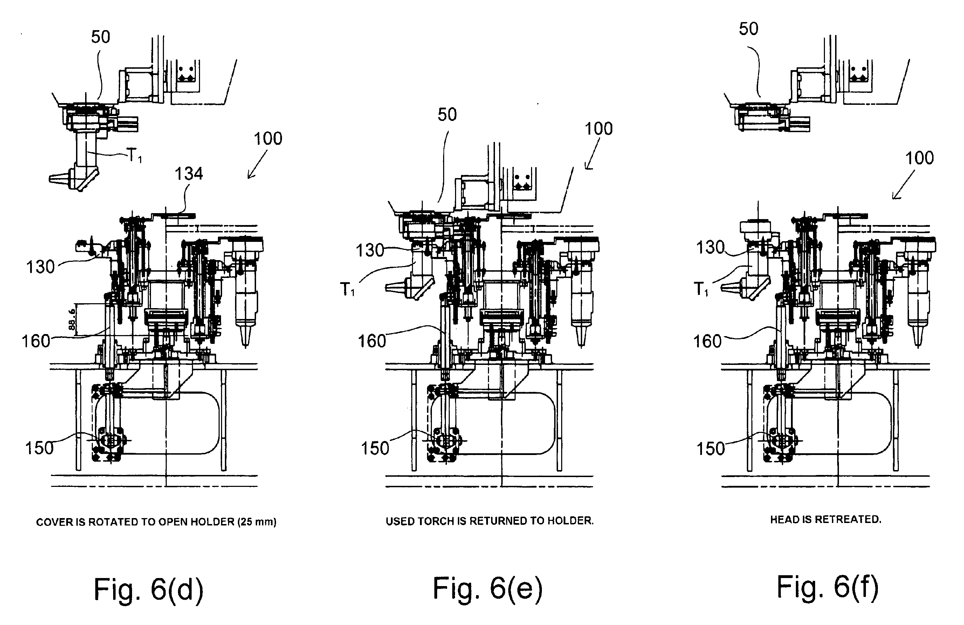

In FIG. 6(d), the cover 134 rotates to open the torch holder 130. In FIG. 6(e), the main spindle 50 moves downward in the direction of axis Z to return the torch T₁ of the main spindle to the torch holder 130, and in FIG. 6(f), the main spindle is elevated and retreated.

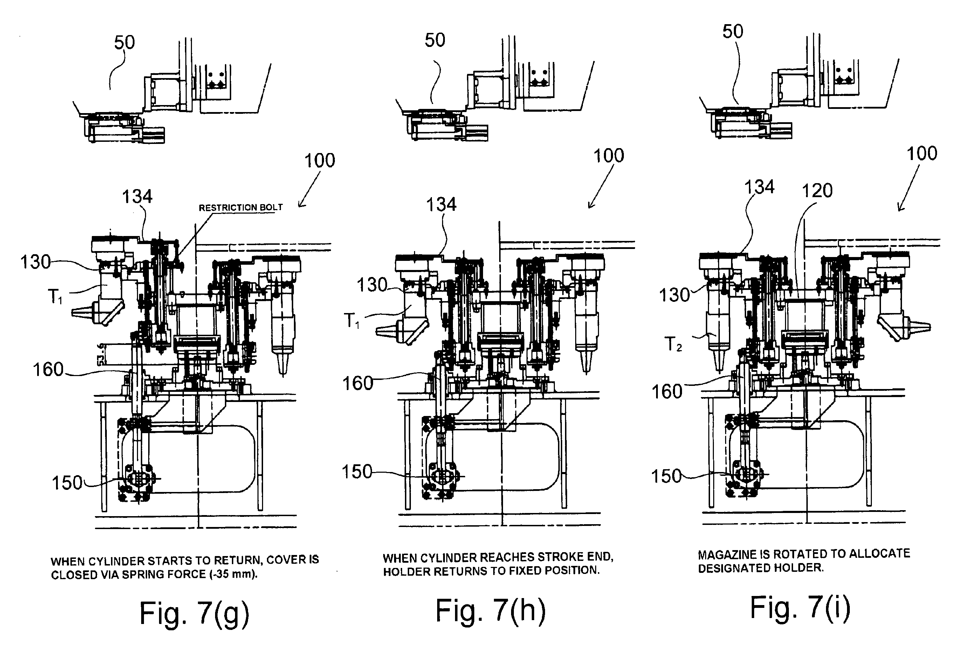

In FIG. 7(g), the cylinder 150 starts its return stroke, and the torch holder 130 starts to descend via the rod 160. By this movement, the cover 134 is closed, and in FIG. 7(h), the cylinder 150 reaches its stroke end, and the torch holder 130 is returned to its fixed position.

In FIG. 7(i), the magazine 120 of the torch automatic exchanger 100 is rotated, and the torch holder 130 storing the torch T₂ to be presently used is allocated to the ATC position.

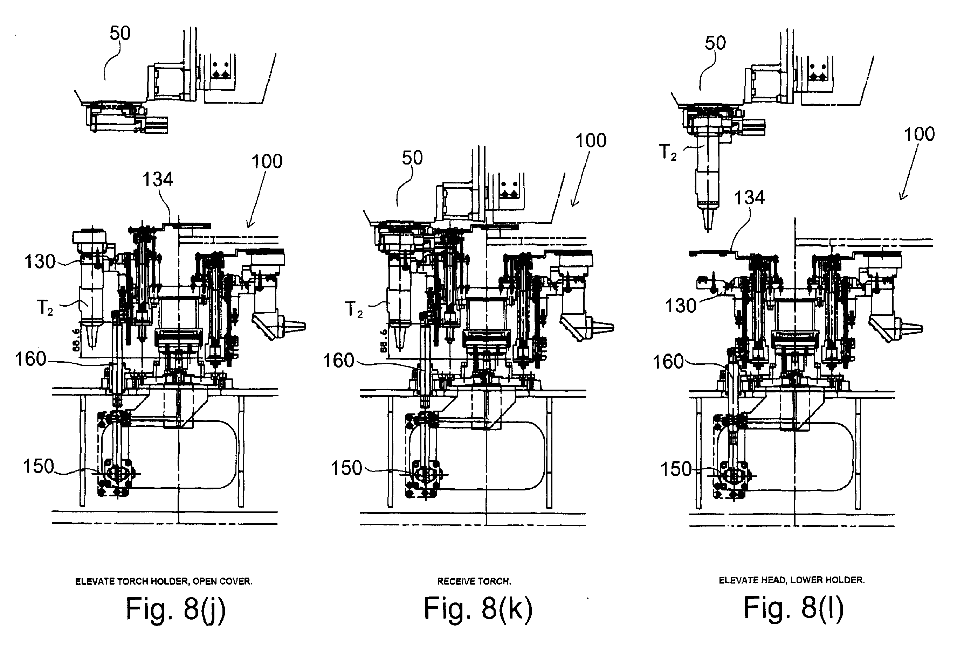

In FIG. 8(j), the cylinder 150 is operated to elevate the torch holder 130 via the rod 160, and the cover 134 is opened.

In FIG. 8(k), the main spindle 50 is lowered to receive the torch T₂.

In FIG. 8(l), the main spindle 50 having the torch T₂ to be presently used attached thereto and the processing head are elevated, the torch holder 130 is lowered to its fixed position, and the automatic torch changing cycle is completed.

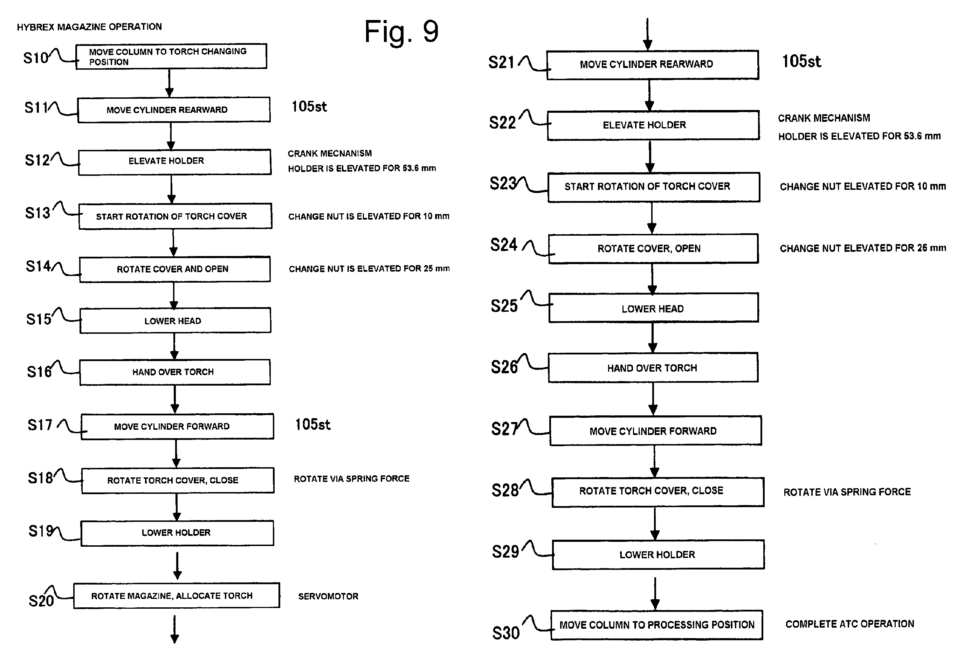

FIG. 9 is a flowchart showing the automatic torch changing process described above.

## Claims

1. A laser hardening device comprising:
a bed;
a table disposed on a bed and rotating around axis C;
a column disposed on the bed and moving along axis Y orthogonal to axis C;
a head having a semiconductor laser oscillator supported by the column and moving along axis Z orthogonal to axis Y;
a main spindle supported by the head and rotating around axis B;
a laser hardening torch attached removably to the main spindle; and
a torch automatic changer disposed on the bed.

2. The laser hardening device according to claim 1, wherein the torch automatic changer comprises a rotating magazine, a torch holder disposed on an outer circumference of the magazine, and a mechanism for moving the torch holder allocated to a torch changing position up and down toward the main spindle of the head.
